Europäisches Patentamt

European Patent Office

Office européen des brevets

(19)

(11) Publication number: 0 379 248
A2

(12) EUROPEAN PATENT APPLICATION

(21) Application number: 90200086.8

(22) Date of filing: 12.01.90

(51) Int. Cl.5: G11B 5/127, G11B 5/187

(30) Priority: 18.01.89 NL 8900107

(43) Date of publication of application:
25.07.90 Bulletin 90/30

(84) Designated Contracting States:
DE FR GB

(71) Applicant: N.V. Philips' Gloeilampenfabrieken
Groenewoudseweg 1
NL-5621 BA Eindhoven(NL)

(72) Inventor: Potgiesser, Jan Antoon Ludolf
c/o INT. OCTROOIBUREAU B.V. Prof.
Holstlaan 6
NL-5656 AA Eindhoven(NL)
Inventor: Sillen, Cornelis Wilhelmus Marie
Peter
c/o INT. OCTROOIBUREAU B.V. Prof.
Holstlaan 6
NL-5656 AA Eindhoven(NL)
Inventor: Heijman, Maritza Gerarda Josepha
c/o INT. OCTROOIBUREAU B.V. Prof.
Holstlaan 6
NL-5656 AA Eindhoven(NL)
Inventor: Wittgen, Balthasar Joseph
Ludovicus Maria
c/o INT. OCTROOIBUREAU B.V. Prof.
Holstlaan 6
NL-5656 AA Eindhoven(NL)

(74) Representative: Van Weele, Paul Johannes
Frits et al
INTERNATIONAAL OCTROOIBUREAU B.V.
Prof. Holstlaan 6
NL-5656 AA Eindhoven(NL)

(54) A method of producing a magnetic head as well as a magnetic head produceable in accordance with the method.

(57) A method of producing a magnetic head (1), the method being based on the use of at least two ferrite core limbs (2, 3), one of the core limbs being provided with a layer (5, 6) of a material having a higher saturation magnetization than the ferrite of the core limbs, whereafter this core limb with the layer present thereon is structured in one manufacturing step, by means of a reactive ion etching process. In the magnetic head (1) the dimension (a), in a direction parallel to the gap width, of layer (5) is smaller than the corresponding dimension (b) of the facing core limb. The layer (5, 6) and a portion of the core limb (2, 3) under this layer have a trapezoidal cross-section.

**FIG.1**

## A method of producing a magnetic head as well as a magnetic head produceable in accordance with the method.

The invention relates to a method of producing a magnetic head, the method being based on the use of at least two ferrite core limbs, at least one of the core limbs being provided with at least a layer of a material having a higher saturation magnetization than the ferrite of the core limbs, whereafter this core limb with the layer present thereon is structured in one manufacturing step, whereafter the core limbs are interconnected and in which method a winding aperture is made in one of the core limbs.

The invention also relates to a magnetic head produceable in accordance with this method, provided with a transducing gap having a gap width and being defined by gap determining faces, a winding aperture having a coil and a head face for cooperation with an information carrier, the magnetic head comprising at least two ferrite core limbs having facing sides, of which at least one side is coated with at least one layer of a material having a higher saturation magnetization than the ferrite of the core limbs, the layer and a core portion contiguous to said layer having, in the region of the gap, a trapezoidal cross-section extending at least substantially parallel to the head face, a side of the cross-section contiguous to the gap being smaller than a side of the cross-section contiguous to the core limb.

The method defined in the opening paragraph is disclosed in the Japanese Patent Application JP-A-63-255801. Therein both the core limb and also the layer present thereon are structured in one manufacturing step. In a generally known method both the core limbs and the layer present thereon are structured by means of a mechanical operation, such as, for example, grinding or lasering. This known method is more advantageous than the method in which the core limb is pre-profiled and whereafter the layer is applied on the profile formed. In this latter method unwanted rounding of the layer edges occurs. These can be removed by polishing the layer. A further disadvantage of this latter method is the possible introduction of stresses in the layer, since this layer is applied on a profile. However, structuring both the core limb and the layer in one manufacturing step in the known manner has its disadvantages. If the core limb and the layer are lasered, problems occur because of different behaviours of the different materials. If the core limb and the layer are grinded stresses in the materials may be introduced and high demands have to be made upon the connection between the layer and the core limb.

The invention has inter alia for its object to provide a method of producing a magnetic head in which the gap can be realized in a simpler manner and with a greater accuracy. The invention also has for its object to provide a magnetic head design which solves the problems as regards the accuracy of the gap width to a significant extent.

As regards the method, the invention is characterized, in that structuring the core limb with the layer present thereon is effected by means of a reactive ion etching process. In the reactive etching process the core limb to be worked is bombarded with, for example, HCl ions. In the process portions of the limbs are removed by the physical shooting action of the ions and the chemical effects due to the HCl-acid. This method is very suitable for the structuring of a plurality of layers of different materials, as in this method the etching behaviours of the individual layers are hardly affected.

Further this method is very useful in producing very small gaps because of the good control of this method during processing. Using this method no stresses will be introduced and no high demands have to be made upon the connection between the layer and the core limb.

The magnetic head defined in the opening paragraph is also disclosed in JP-A-63-255801. Because of the presence of the layers of a material having a high saturation density, strong write fields can be generated by the magnetic head. In addition, this may cause additional supply of flux to the transducing gap, as a result of which saturation problems of the core limbs near the transducing gap are less critical. In the prior art magnetic head the desired gap width is obtained by an accurate positioning of the two core limbs relative to each other. If small errors would occur during positioning, a smaller gap width would be the result.

As regards the magnetic head, the invention is characterized, in that, in a direction parallel to the gap width, the dimension of the layer at the gap is smaller than the corresponding dimension of the facing core limb. Herein, the gap width is not determined by the dimension of the gap faces of the two core limbs but by the dimension of only one gap face of a core limb. This also means that there is no need for the core limbs to be positioned accurately with respect to each other, so that less problems as regards the accuracy of the gap width occurs.

An embodiment of the magnetic head according to the invention, is characterized in that one further layer is present on at least the core limb and on the layer, both having near the gap a trapezoidal cross-section running at least substantial parallel to the head face. A relatively thick layer increasing the flux from a trapezoidal profile may lead to problems as regards the definition of the gap width as a result of the rounded edges of the layer on the vertexes of the trapezoid. Also in the region of the rounded edges, discontinuities in the layer may occur in the form of stresses in the layer. The problems diminish in proportion to the thinness of the layer. In the magnetic head according to the invention, it suffices to have a thin layer for additional increase of the flux, as the increase in the flux is mainly realized by the trapezoidal layer.

The invention will now be described in greater detail by way of example with reference to the accompanying Figures illustrating embodiments and semi-manufactured products after consecutive manufacturing steps of the magnetic head in accordance with the invention.

Herein:

Fig. 1 shows an embodiment of a magnetic head,

Fig. 2 shows parts of a further embodiment of a magnetic head, and

Fig. 3 shows semi-manufactured products after consecutive manufacturing steps during a manufacturing procedure for producing the magnetic head shown in Fig. 2.

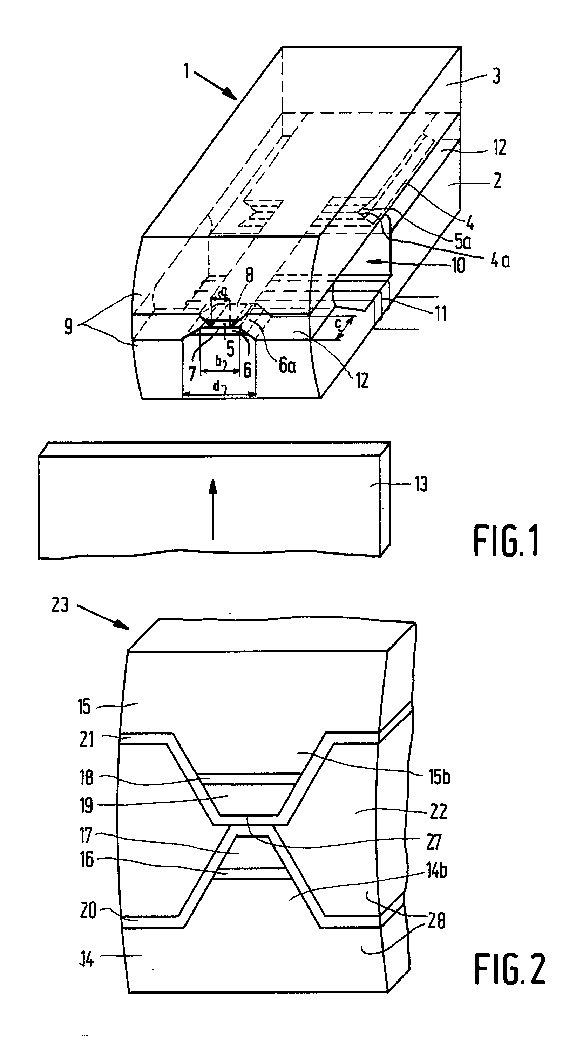

The magnetic head shown in Fig. 1 comprises a winding aperture 10 having a coil 11, a transducing gap 7 having a gap width $a$ and defined by gap determining faces 8, and a head face 9 for cooperation with an information carrier 13, shown here schematically in the form of a magnetic tape. In addition, the magnetic head 1 comprises two core limbs 2, 3, core limb 3 having a trapezoidal layer consisting of layer portions of a material having a high saturation magnetization, for example sendust or CoNbZr. The other core limb is also coated with such a layer but is formed of layer portions 4, 6, a layer portion 6 of which is contiguous to the head face 9 of the magnetic head. The production of said magnetic head 1 is started from the core limbs 2 and 3 made of ferrite wafers which are both coated with a 5 to 10 micrometer thick metal layer of a metal having a high saturation magnetization.

The metal layers are flat, which is an advantage over trapezoidal layers (as for example in Tilted Sputtered Sendust Head) as it was found that many of these metal layers, obtained by sputtering, cause unwanted mechanical stresses. Edge masks are deposited on the metal layers, so that after chemical or physical etching layer portion 5 is obtained in core limb 3, and the layer portions 4 and 6 on core limb 2.

Etching is effected such that the edge parts are given an oblique plane 4a, 5a, 6a, whereby the flux from the ferrite is concentrated in the gap plane 8 to be formed. Because of this form of the layers, the critical dimensions as regards saturation, which define the surface of the smallest section of the core limb through which the magnetic flux is passed, exceed the dimensions of the gap boundary surface allowing for additional flux via the core limb. In prior art head constructions it is, for example, necessary to provide microprofiles before a metal layer can be formed to produce the same necessary effect.

After etching, a winding aperture is provided in core limb 2. An advantage thereof is that the winding aperture is less complicated than in the prior art ferrite head, as the gap height $c$ is defined by layers portion 6 and not by the winding aperture nose. Moreover, the winding aperture is only manufactured in ferrite, which is advantageous, as it was found that working a combination of metal and ferrite may cause complications.

In the gap face, layer portion 5 has a width $a$ which is identical to the required gap width, while the width $b$ of the layer portion 6 is so much wider that, while using only simple aligning means, the gap width is only defined by layer portion 5. The layer portion 5, in a direction perpendicular to head face 9, is much longer than layer portion 6, so that, while using only simple aligning means, the layer portion 6 defines the lower limit of the gap height. This renders the use of very accurate aligning means and methods superfluous.

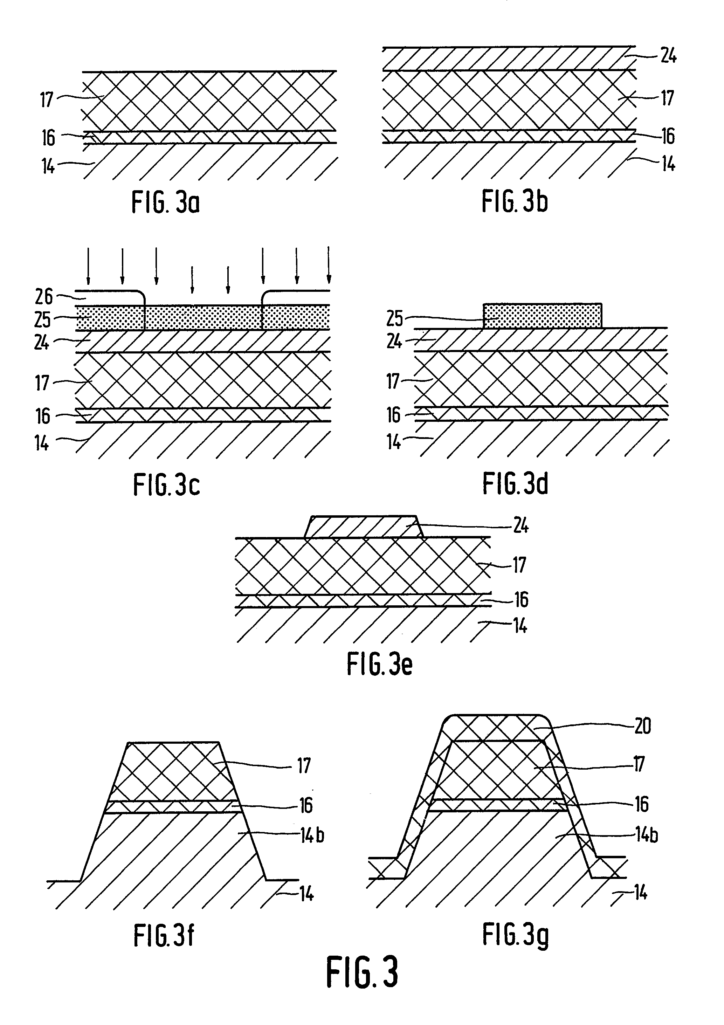

Fig. 2 shows the portion near the head face 28 of a further magnetic head 23 according to the invention. The core limbs 14, 15 each comprise a trapezoidal core limb 14b, 15b coated with a permalloy layer 16, 18 and a sendust layer 17, 19, which layers are also trapezoidal. The permalloy layer serves to provide an adequate bond of the sendust layer to the ferrite of the core limb. If namely, sendust layer 17, 19 were deposited directly on the ferrite, an unwanted non-magnetic intermediate layer would develop on the interface. The flux surface of the core limb 14b, 15b is increased by the deposited trapezoidal layer 17, 19. Since this trapezoid also continues in core limb 14b, 15b, the spacing between the two core limbs 14, 15 is relatively increased, reducing the change of side read effect. These trapezoidal planes are coated with a further layer 20, 21 of a material having a high saturation magnetization, of a type allowing additional flux to be supplied to the gap surface. If these layers are thin, the effect of rounded edges and stresses is relatively small. A preferred method of manufacturing this head 23 is based on a substrate 14 of a crystalline MnZn-ferrite. A permalloy layer 16 of about 0.5 $\mu$m is first sputtered onto this substrate. During the same sputter run a sendust layer 17 of about 2.5 $\mu$m is deposited by sputtering on this permalloy layer (Fig. 3a). Thereafter, a layer of $Al_2O_3$ 24 which serves as a mask for the physical etching of the permalloy/sendust/ferrite combination (Fig. 3b) is sputtered onto the sendust layer. Before the layer 24 is structured, a lacquer layer 25 having a thickness of about 1.6 µm is provided thereon. This lacquer layer is exposed to light through a mechanical mask 26 and thereafter developed, whereafter the exposed portions are removed by dissolving them in a lye (Fig. 3c, 3d). Subsequently, the $Al_2O_3$ mask is structured by means of physical etching, in this case by reactive ion etching with a $CHF_3Ar$-plasma, during which the structured lacquer layer 25 serves as a mask (Fig. 3d, 3e). After etching of the $Al_2O_3$ layer the lacquer is removed and the sendust and permalloy layers 17, 16 and the ferrite substrate 14 are successively etched during which the structured $Al_2O_3$ layer 24 serves as a mask (Fig. 3e, 3f). After etching, a further (permalloy/)sendust layer 20 can optionally be sputtered onto the profile to allow for additional flux to the gap, in which the thickness of the layer in view of rounding and topographically induced stresses must be relatively small (Fig. 3g).

This method of narrowing the track can be applied to coated gap heads. The advantages of this method can be optionally utilised for small track widths (in the order of 10 µm) where other methods cannot be used anymore. A coated gap head is suitable for high density magnetic recordings, for example 8 mm video, digital audio and digital video recording.

## Claims

1. A method of producing a magnetic head, the method being based on the use of at least two ferrite core limbs, at least one of the core limbs being provided with at least a layer of a material having a higher saturation magnetization than the ferrite of the core limbs, whereafter this core limb with the layer present thereon is structured in one manufacturing step, whereafter the core limbs are interconnected and in which method a winding aperture is made in one of the core limbs, characterized, in that structuring the core limb with the layer present thereon is effected by means of a reactive ion etching process.

2. A magnetic head produceable in accordance with this method, provided with a transducing gap having a gap width and being defined by gap determining faces, a winding aperture having a coil and a head face for cooperation with an information carrier, the magnetic head comprising at least two ferrite core limbs having facing sides, of which at least one side is coated with at least one layer of a material having a higher saturation magnetization that the ferrite of the core limbs, the layer and a core portion contiguous to said layer having, in the region of the gap, a trapezoidal cross-section extending at least substantially parallel to the head face, a side of the cross-section contiguous to the gap being smaller than a side of the cross-section contiguous to the core limb, characterized, in that, in a direction parallel to the gap width, the dimension of the layer at the gap is smaller than the corresponding dimension of the facing core limb.

3. A magnetic head as claimed in Claim 2, characterized in that at least one further layer is present on the core portion and the layer, which near the gap have a trapezoidal cross-section extending at least substantially parallel to the head face.

FIG.1

FIG.2

FIG. 3a

FIG. 3b

FIG.3c

FIG.3d

FIG.3e

FIG.3f

FIG.3g

FIG.3